# EUROPÄISCHE PATENTSCHRIFT

(11) **EP 4 704 755 B1**
(45) Veröffentlichungstag und Bekanntmachung des Hinweises auf die Patenterteilung: **21.10.2026**
(21) Anmeldenummer: 25739651.5
(22) Anmeldetag: 09.07.2025
(51) Int. Cl.: A61C 1/00, H03H 7/01, H04B 5/22, H04B 5/72

(54) **ZAHNMEDIZINISCHER MOTOR- ODER ZAHNMEDIZINISCHE KUPPLUNGSEINHEIT UND ZAHNMEDIZINISCHE STEUEREINHEIT**
DENTAL MOTOR OR CLUTCH UNIT AND DENTAL CONTROL UNIT
UNITÉ DE MOTEUR OU D'EMBRAYAGE DENTAIRE ET UNITÉ DE COMMANDE DENTAIRE

(30) Priorität: 22.07.2024 EP 24189951
(43) Veröffentlichungstag der Anmeldung: 11.03.2026
(73) Patentinhaber: KaVo Dental GmbH, 88400 Biberach an der Riss (DE)
(72) Erfinder: BUERK, Richard, 88433 Schemmerhofen (DE); NIEDERREUTER, Patrick, 89299 Unterroth (DE)
(74) Vertreter: Thun, Clemens
(86) Internationale Anmeldenummer: PCT/EP2025/069606
(87) Internationale Veröffentlichungsnummer: WO 2026/021863

(56) Entgegenhaltungen:
- US-A1- 2004 267 297
- US-A1- 2021 298 872

## Beschreibung

Die vorliegende Erfindung betrifft eine zahnmedizinische Motor- oder Kupplungseinheit, welche zur Kopplung mit einem zahnmedizinischen Instrument ausgebildet ist und eine elektrische Schaltungsanordnung aufweist, die über ein Leiterpaar mit einer Versorgungseinheit verbindbar ist, wobei die Schaltungsanordnung ferner einen Verbraucher beinhaltet, der über das Leiterpaar mit Gleichspannung oder einer niederfrequenten Wechselspannung versorgt wird. Ferner betrifft die vorliegende Erfindung eine zahnmedizinische Steuerungseinheit zum Betreiben eines zahnmedizinischen Instruments.

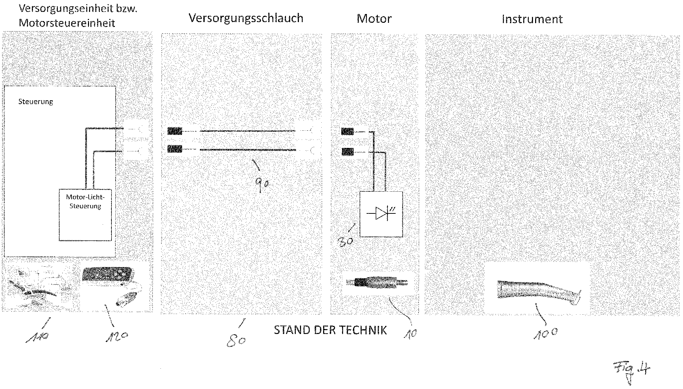

Zahnmedizinische Instrumente wie z.B. Bohrhandstücke werden in der Regel durch vorgeschaltete Einheiten mit Strom und weiteren Medien versorgt, um letztendlich eine Durchführung der Behandlung mit Hilfe des Instruments zu ermöglichen. Eine hierbei üblicherweise vorliegende Konfiguration ist in Figur 4 dargestellt, wobei der Fall für ein zahnärztliches Instrument 100 gezeigt ist, welches mit Hilfe eines Elektromotors betrieben wird. Wie nachfolgend noch näher erläutert wird, betrifft die vorliegende Erfindung allerdings in gleicher Weise auch sog. Turbinenhandstücke, die mittels Druckluft betrieben werden.

Dabei sind derartige Instrumente 100 in der Regel derart ausgeführt, dass sie verhältnismäßig einfach zu reinigen und zu sterilisieren sind. Dies bedeutet, dass das Instrument 100 selbst üblicherweise keine sensiblen elektronischen Komponenten beinhaltet, welche bei einem derartigen Aufbereitungsprozess beschädigt werden könnten. Insbesondere befindet sich deshalb der zum Betreiben des zahnärztlichen Bohrers vorgesehene Elektromotor in der Regel nicht innerhalb des Instruments 100 selbst, sondern in einer davon getrennten Einheit 10, die lösbar mit dem Instrument 100 verbunden werden kann. Der innerhalb dieser Motoreinheit 10 vorgesehene Elektromotor erzeugt dann die zum Betreiben des zahnärztlichen Bohrers erforderliche Rotation, die mittels geeigneter Übertragungselemente auf das Instrument 100 und letztendlich den Bohrer übertragen wird. Die hierfür erforderlichen Kupplungselemente einer derartigen Motoreinheit 10 sind darüberhinausgehend oftmals dazu ausgebildet, auch Luft und/oder Wasser zu übertragen, mit deren Hilfe die durch den Bohrer bearbeitete Stelle gereinigt oder gekühlt werden kann.

Die Motoreinheit 10 beinhaltet im dargestellten Fall neben dem nicht näher dargestellten Elektromotor auch eine Lichtquelle 30, insbesondere eine LED-Lichtquelle, deren Licht in einen durch das Instrument 100 verlaufenden Lichtleiter (nicht dargestellt) eingekoppelt wird, wobei dieser Lichtleiter dann derart ausgeführt ist, dass im vorderen Endbereich des Instruments 100 eine Lichtabgabe erfolgt, durch die der von dem Bohrer zu bearbeitende Bereich beleuchtet wird. Die Positionierung der Lichtquelle 30 in der Motoreinheit 10 bringt dabei - analog zum Motor - wiederum den Vorteil mit sich, dass die Gefahr einer Beschädigung bei einem Reinigen oder Sterilisieren des Instruments 100 vermieden wird. Ferner sind in diesem Fall dann keine zusätzlichen elektrischen Anschlusskontakte zwischen Motoreinheit 10 und Instrument 100 erforderlich, sodass die Ausgestaltung der Kupplungselemente vereinfacht werden kann.

Eingangsseitig ist die Motoreinheit 10 über einen Versorgungsschlauch 80 mit einer Einheit verbunden, über die der Motor betrieben wird bzw. die den Motor mit Strom versorgt. In der Regel wird es sich hierbei um die Steuereinheit eines zahnärztlichen Behandlungsplatzes 110 handeln, die das Anschließen und die Versorgung unterschiedlichster dentaler Behandlungs- oder Untersuchungsgeräte ermöglicht. Auch separate Motorsteuereinheiten 120 sind wie dargestellt bekannt, die dann ein einziges Motorinstrument entsprechend versorgen. Durch den schematisch dargestellten Versorgungsschlauch 80 verlaufen im derartigen Fall dann insbesondere nicht gezeigte Leitungen zur Stromversorgung des Motors der Motoreinheit 10, wobei im Falle eines Turbinenhandstücks anstelle des Versorgungsstroms für den Motor die zum Betreiben der Turbine erforderliche Druckluft über den Schlauch 80 übermittelt wird. Darüber hinaus ist allerdings entsprechend der Darstellung in Figur 7 auch ein Leiterpaar 90 vorgesehen, über welches die LED-Lichtquelle 30 mit Gleichspannung oder einer niederfrequenten Wechselspannung versorgt wird. Ferner können durch den Versorgungsschlauch 80 auch nicht näher dargestellte Leitungen zur Übertragung von Luft- oder Wasser verlaufen.

Um sicherzustellen, dass die durch die Versorgungseinheit 110 bzw. die Motorsteuereinheit 120 zur Verfügung gestellte Spannung zum Betreiben des Motors auf das Instrument 100 abgestimmt ist, ist es oftmals erwünscht, dass das lösbar mit der Motoreinheit 10 koppelbare Instrument 100 identifiziert werden kann. Da verschiedene Instrumente mit unterschiedlichen Drehzahlen oder bei unterschiedlichen Drehmomenten betrieben werden, muss das Verhalten der Versorgungseinheit 110 bzw. der Motorsteuereinheit 120 jeweils individuell auf das aktuell genutzte Instrument 100 angepasst werden, weshalb idealerweise die beteiligten Einheiten in die Lage versetzt werden, das angeschlossene Instrument 100 automatisch zu erkennen.

Hierfür sind aus dem Stand der Technik verschiedene Möglichkeiten bekannt, wobei eine erste bekannte Variante darin besteht, das Instrument 100 mit einem Identifizierungselement bspw. in Form eines Widerstands zu versehen, der mit einer entsprechenden Schaltung verbunden wird, welche in der Lage ist, die Höhe des Widerstands und damit den Typ des Instruments 100 zu bestimmen. Nachteilig ist in diesem Fall allerdings, dass diese Variante wiederum zusätzliche Leitungen und v.a. Steckkontakte zwischen Motoreinheit 10 und Instrument 100 erfordert, was aufgrund der vorliegenden Größenverhältnisse nur schwer realisierbar und der Zuverlässigkeit abträglich ist.

Weiterhin sind aus dem Stand der Technik Lösungen bekannt, bei denen am bzw. im Instrument 100 im Bereich der Kupplung ein NFC/RFID-Tag angeordnet ist, welcher drahtlos ausgelesen werden kann, wobei dieser NFC/RFID-Tag darüberhinausgehend auch dazu genutzt werden kann, um die Verwendung des Instruments sowie durchlaufene Reinigungs- oder Aufbereitungszyklen zu protokollieren. Auch in diesem Fall ist dann allerdings die Positionierung einer entsprechenden Sende- und Empfangseinheit im Bereich der Motoreinheit 10 erforderlich, die dann wiederum mit Hilfe zusätzlicher Leitungen mit der eigentlichen Versorgungseinheit 110 oder Motorsteuereinheit 120 verbunden werden muss, um eine Kommunikation zwischen Versorgungseinheit 110 / Motorsteuereinheit 120 und NFC/RFID-Tag zu ermöglichen.

Das drahtlose Identifizieren von Dentalinstrumenten ist beispielsweise in der US 2004/267297 A1 oder der US 2021/298872 A1 beschrieben. Die US 2004/267297 A1 beschreibt hierbei eine zahnmedizinische Motor- und Kupplungseinheit, die zur Kopplung mit zahnmedizinischen Instrumenten vorgesehen ist und diese über Nahfeldkommunikation identifiziert. In den gezeigten Ausführungsbeispielen ist eine separate Kabelführung für Leistungs- und Signalübertragung vorgesehen. Die US 2021/298872 A1 beschreibt ein batteriebetriebenes Handinstrument für zahnmedizinische Zwecke, welches ein Bluetooth-Modul für eine drahtlose Kommunikation aufweist.

Der vorliegenden Erfindung liegt die Aufgabenstellung zugrunde, im Vergleich zum Stand der Technik Verbesserungen bereitzustellen, sodass mit einem möglichst geringen Aufwand ein Identifizieren des angeschlossenen zahnärztlichen Instruments ermöglicht ist und gleichzeitig eine kompakte Bauform der zum Anschließen des Instruments erforderlichen Einheiten gewährleistet ist.

Die Aufgabe wird durch eine zahnmedizinische Motor- oder Kupplungseinheit, welche die Merkmale des Anspruchs 1 aufweist, gelöst. Vorteilhafte Weiterbildungen der Erfindung sind Gegenstand der abhängigen Ansprüche.

Wie im Zusammenhang mit dem Stand der Technik gemäß Figur 4 erläutert wurde, weist die Einheit zum Anschließen des Instruments in der Regel immer einen entsprechenden Verbraucher auf, im vorliegenden Fall die LED-Lichtquelle, der über ein Leiterpaar mit einer Gleichspannung oder einer niederfrequenten Wechselspannung versorgt wird. Gemäß der vorliegenden Erfindung ist nunmehr vorgesehen, diese bereits bestehenden Leitungen zu verwenden, um zusätzlich ein Hochfrequenz-Kommunikationssignal einzuprägen, welches für eine Kommunikation mit einer entsprechenden Sende- und Empfangseinheit des zahnmedizinischen Instruments genutzt wird. Hierdurch besteht die Möglichkeit, diese bereits existierenden Leitungen für einen zusätzlichen Anwendungsfall zu nutzen, ohne dass zusätzliche Kontakte oder dergleichen erforderlich wären. Um trotz allem zu gewährleisten, dass einerseits der Verbraucher in gewohnter und zuverlässiger Weise versorgt wird und andererseits die Kommunikation mit dem Instrument nicht beeinträchtigt wird, ist ferner vorgesehen, dass integrierte Kopplungs- und Trennglieder verwendet werden, welche die zur Stromversorgung des Verbrauchers genutzte Gleichspannung oder niederfrequente Wechselspannung von dem HF-Kommunikationssignal entkoppeln.

Gemäß der vorliegenden Erfindung wird also eine zahnmedizinische Motor- oder Kupplungseinheit vorgeschlagen, welche zur Kopplung mit einem zahnmedizinischen Instrument ausgebildet ist, wobei die Motor- oder Kupplungseinheit eine elektrische Schaltungsanordnung aufweist, welche über ein Leiterpaar mit einer Versorgungseinheit verbindbar ist und aufweist:
- einen Verbraucher, der über das Leiterpaar mit Gleichspannung oder eine niederfrequenten Wechselspannung versorgt wird,
- eine Sende- und Empfangseinheit, welche als Antenne dazu ausgebildet ist, mittels/über Nahfeldkommunikation mit einer weiteren Sende- und Empfangseinheit zu kommunizieren und hierzu ein über das Leiterpaar übermitteltes HF-Kommunikationssignal drahtlos zu senden oder ein von der weiteren Sende- und Empfangseinheit empfangenes HF-Kommunikationssignal in das Leiterpaar einzukoppeln,
- in die Schaltungsanordnung integrierte Kopplungs- und Trennglieder, welche die zur Stromversorgung des Verbrauchers genutzte Gleichspannung oder niederfrequente Wechselspannung von dem HF-Kommunikationssignal entkoppeln.

Die erfindungsgemäß eingesetzten Kopplungs- und Trennglieder, die es wie bereits erläutert ermöglichen, die ursprünglich lediglich zur Stromversorgung des Verbrauchers genutzten Leitungen nunmehr gleichzeitig auch zu anderen Zwecken zu nutzen, weisen hierbei vorzugsweise zumindest einen Kondensator auf, der in Serie zu der Sende- und Empfangseinheit geschaltet ist. Ferner ist vorzugsweise zumindest eine Induktivität vorgesehen, welche in Serie zu dem Verbraucher geschaltet ist. Die Induktivität verhindert hierbei einen Kurzschluss bzw. allgemein eine Störung des für die Kommunikation genutzten HF-Signals durch den Verbraucher, während der Kondensator einen Kurzschluss des Gleichstromsignals verhindert. Die Serienschaltung bestehend aus Kondensator und Sende- und Empfangseinheit ist hierbei vorzugsweise parallel zur Serienschaltung bestehend aus Induktivität und Verbraucher geschaltet.

Die Motor- oder Kupplungseinheit weist hierbei vorzugsweise eingangsseitige Versorgungsanschlüsse auf, über welche die Schaltungsanordnung mit einer Versorgungsleitung verbindbar ist, welche das Leiterpaar mit der Versorgungseinheit verbindet. Die Versorgungsleitung kann dabei wie bereits erläutert durch einen Versorgungsschlauch gebildet sein, der bspw. von einer zahnärztlichen Behandlungseinheit oder einer speziellen Motorsteuereinheit zu der Motor- oder Kupplungseinheit führt.

Vorzugsweise ist vorgesehen, dass der Verbraucher und die Sende- und Empfangseinheit auf einem gemeinsamen Träger, insbesondere auf einer gemeinsamen Platine angeordnet sind. Es ergibt sich hierdurch eine besonders kompakte Bauweise. Bei dem Verbraucher handelt es sich vorzugsweise um eine Lichtquelle, insbesondere um eine LED, deren Licht in einen Lichtleiter des zahnärztlichen Instruments eingekoppelt wird. Allerdings kann der Verbraucher auch anderen Zwecken dienen und es wäre beispielsweise denkbar, dass der Verbraucher ein Sensor, z.B. ein Reed-Schalter ist, mit dessen Hilfe automatisch die Entnahme des Instruments aus einer entsprechenden Instrumentenablage der Versorgungseinheit oder Motorsteuereinheit erkannt wird.

Die erfindungsgemäße Motor- oder Kupplungseinheit weist ferner vorzugsweise Kopplungselemente zur mechanischen Verbindung mit dem medizinischen Instrument auf, wobei die Sende- und Empfangseinheit im Bereich der Kupplungselemente angeordnet ist, um mit einer in dem Instrument vorgesehenen weiteren Sende- und Empfangseinheit drahtlos zu kommunizieren. Diese Kommunikation kann dann wie bereits erläutert dazu genutzt werden, Daten des Instruments auszulesen und dieses auf diesem Wege zu identifizieren oder ggf. auch entsprechende Informationen in einem integrierten Speicherelement des Instruments zu hinterlegen.

Die bereits erwähnten Kopplungselemente können je nach Art des Instruments dazu ausgebildet sein, zusätzlich ein Antriebsmedium wie z.B. Strom oder Druckluft zu übermitteln oder auch eine mechanische Bewegung, insbesondere eine Rotationsbewegung zur Verfügung zu stellen, die an das mit der Motor- oder Kupplungseinheit verbundene medizinische Instrument übertragen wird. Bei der Motor- oder Kupplungseinheit kann es sich also sowohl um eine Einheit zum Betreiben von sog. Motorinstrumenten, denen die Verwendung eines Elektromotors zugrunde liegt, als auch um eine Einheit zum Betreiben von luftbetriebenen Dentalinstrumenten handeln. Diese luftbetriebenen Dentalinstrumente umfassen insbesondere Turbineninstrumente, bei denen eine im Instrument vorgesehene Turbine mittels Druckluft angetrieben wird, sowie auch sog. Pulverstrahlgeräte oder pneumatisch betriebene Zahnsteinentfernungsgeräte. Die Kopplungselemente weisen dabei vorzugsweise einen Kupplungszapfen auf, an dessen Außenumfang Kanäle verlaufen, die mittels umlaufender Dichtungen voneinander getrennt sind mit entsprechenden Kanälen bzw. Ausnehmungen in einem Kupplungsbereich des zahnärztlichen Instruments korrespondieren, wobei über die Kanäle besonders bevorzugt die Übergabe weiterer Medien, beispielsweise von Luft, Wasser und/oder Spraywasser erfolgt.

Die in der erfindungsgemäßen zahnmedizinischen Motor- oder Kupplungseinheit vorgesehene Sende- und Empfangseinheit kann hierbei vorzugsweise als ringförmige Antenne ausgebildet sein. Hierdurch wird eine besonders gute Platzierung hinsichtlich der in dem Instrument vorgesehen Sende- und Empfangseinheit ermöglicht, sodass eine zuverlässige drahtlose Kommunikation ermöglicht wird. Ergänzend kann im Übrigen auch vorgesehen sein, dass die Motor- oder Kupplungseinheit eine von der Sende- und Empfangseinheit getrennte weitere Sende- und Empfangseinheit aufweist, wobei beide Sende- und Empfangseinheiten der Motor- oder Kupplungseinheit dann wiederum drahtlos miteinander kommunizieren. Dies kann dann bspw. dazu genutzt werden, dass auch in einem in der Motor- oder Kupplungseinheit vorgesehenen Speicherelement Informationen hinterlegt werden, die bspw. Auskunft darüber geben, über welchen Zeitraum bzw. wie oft die Motor- oder Kupplungseinheit genutzt wurde.

Die in der erfindungsgemäßen Motor- oder Kupplungseinheit vorgesehene Sende- und Empfangseinheit dient wie erläutert lediglich als Zwischenstation, um die eigentlich gewünschte Kommunikation zwischen Instrument sowie zentraler Versorgungseinheit bzw. Motorsteuereinheit zu ermöglichen. Auch die zentrale Steuereinheit weist dementsprechend geeignete Mittel zur Kommunikation auf, die wiederum derart ausgeführt sein müssen, dass sie das bereits vorhandene, zur Stromversorgung des Verbrauchers genutzte Leiterpaar verwenden und trotz allem eine zuverlässige Datenübertragung gewährleistet ist.

Gemäß einem weiteren Aspekt der vorliegenden Erfindung wird deshalb eine zahnmedizinische Steuerungseinheit, insbesondere Behandlungseinheit zum Betreiben eines zahnmedizinischen Instruments vorgeschlagen, welche eine Motor- oder Kupplungseinheit wie oben erläutert aufweist, wobei die Steuerungseinheit über eine Leitung mit einem Leiterpaar mit der Motor- oder Kupplungseinheit verbindbar ist und wobei die Steuerungseinheit ferner aufweist:
- einen Treiber oder eine Auswerteschaltung, welche(r) zur Stromversorgung des Verbrauchers diesen über das Leiterpaar mit Gleichspannung oder einer niederfrequenten Wechselspannung versorgt,
- eine Nahfeldkommunikations-Einheit, welches das Leiterpaar zum Senden und Empfangen von HF-Kommunikationssignalen nutzt, sowie
- Kopplungs- und Trennglieder, welche die zur Stromversorgung des Verbrauchers genutzte Gleichspannung oder niederfrequente Wechselspannung von dem HF-Kommunikationssignal entkoppeln.

Analog zu der in der erfindungsgemäßen Motor- oder Kupplungseinheit vorgesehenen Schaltungsanordnung ist auch bei der Steuereinheit vorzugsweise vorgesehen, dass die Kopplungs- und Trennglieder mindestens einen Kondensator aufweisen, der in Serie zu der Nahfeldkommunikations-Einheit geschaltet ist, wobei besonders bevorzugt ferner mindestens eine Induktivität vorgesehen ist, welche in Serie zu dem Treiber geschaltet ist. Der Treiber zur Stromversorgung des Verbrauchers kann dabei insbesondere dazu ausgebildet sein, den Verbraucher mit einer veränderbaren Leistung zu betreiben. Im Falle einer Lichtquelle kann dementsprechend auf diesem Weg die Helligkeit bzw. Intensität des abgegebenen Lichts beeinflusst werden. Trotz allem ist eine ungestörte Kommunikation mit dem Instrument gewährleistet, ohne dass hierfür zusätzliche Leitungen innerhalb des Versorgungsschlauchs und/oder Anschlüsse im Bereich der Motor- oder Kupplungseinheit vorgesehen sein müssten.

Nachfolgend soll die Erfindung anhand der beiliegenden Zeichnung näher erläutert werden. Es zeigen:
- Figur 1: ein erstes Ausführungsbeispiel einer erfindungsgemäßen Motoreinheit zum Betreiben eines zahnärztlichen Instruments;
- Figur 2: ein Ausführungsbeispiel einer erfindungsgemäßen Kupplungseinheit, die zum Betreiben eines zahnmedizinischen Turbineninstruments genutzt wird;
- Figur 3: eine vorteilhafte Weiterbildung des Ausführungsbeispiels von Figur 1 und
- Figur 4: die Versorgung eines zahnärztlichen Instruments über eine Motoreinheit entsprechend dem Stand der Technik.

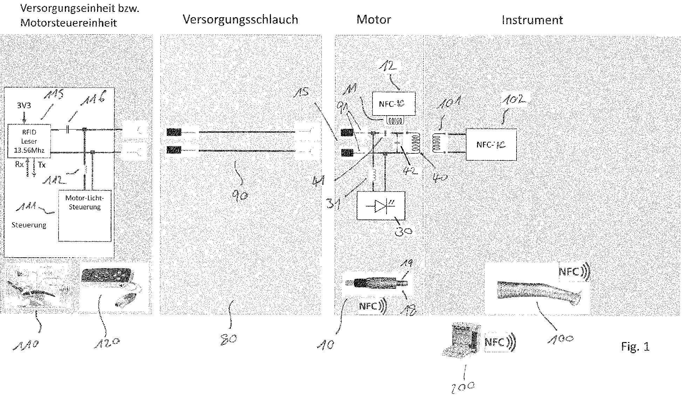

Das in Figur 1 dargestellte erste erfindungsgemäße Ausführungsbeispiel geht von der gleichen Konfiguration aus, die auch bei dem in Figur 4 dargestellten Beispiel entsprechend dem Stand der Technik vorliegt. Ein zahnärztliches Behandlungsinstrument 100 soll also durch eine Motoreinheit 10 betrieben werden und ist hierzu lösbar mit der Motoreinheit 10 verbindbar. Ein in der Motoreinheit 10 angeordneter, nicht näher dargestellter Elektromotor erzeugt hierbei eine Drehbewegung, die über entsprechende, im Kupplungsbereich 18 der Motoreinheit 10 vorgesehene Übertragungskomponenten auf das Handstück 100 übertragen wird, sodass letztendlich der am vorderen Endbereich des Instruments 100 angeordnete Bohrer in Rotation versetzt wird. Dieser Kupplungsbereich 18 wird insbesondere durch einen Kupplungszapfen 19 gebildet, der in eine entsprechende Aufnahmeöffnung am rückseitigen Ende des Instrumentengehäuses einführbar ist. Wie nachfolgend noch erläutert wird, dient der Kupplungszapfen nicht nur die Übertragung der Motorrotation an das Instrument 100, sondern es kann zusätzlich auch die Übergabe von Medien wie Luft oder Wasser erfolgen.

Eingangsseitig ist die Motoreinheit 10 mit einem Versorgungsschlauch 80 verbunden, der entweder lösbar mit der Motoreinheit 10 verbunden ist oder auch Bestandteil der erfindungsgemäßen Motoreinheit 10 sein kann und der zu einer zentralen Versorgungseinheit führt. Es kann sich hierbei um die Versorgungseinheit eines zahnärztlichen Behandlungsplatzes 110 handeln, wie dies vielfach aus dem Stand der Technik bekannt ist. Derartige Behandlungsplätze 110 unterstützen die Durchführung verschiedener Untersuchungen und Behandlungen und sind oftmals in der Lage, sehr unterschiedlich ausgestaltete Untersuchungs- oder Behandlungsinstrumente entsprechend zu betreiben. Alternativ hierzu kann die Versorgung allerdings auch über eine separate Motorsteuereinheit 120 erfolgen, die ausschließlich zum Betreiben einer Motoreinheit 10 vorgesehen ist. Derartige Motorsteuereinheiten 120 sind im Vergleich zu einer Versorgungseinheit 110 eines zahnärztlichen Behandlungsplatzes sehr kompakt gestaltet und bringen den Vorteil mit sich, dass sie transportabel sind und somit vielseitig an unterschiedlichen Orten genutzt werden können. Allerdings sind Möglichkeiten; verschiedene Instrumente-Typen zu betreiben, sehr beschränkt bzw. nicht vorhanden

Die Hauptaufgabe der Versorgungseinheit 110 bzw. der Motorsteuereinheit 120 besteht dabei darin, über nicht näher dargestellte elektrische Leitungen, die durch den Versorgungsschlauch 80 verlaufen, den in der Motoreinheit 10 vorgesehenen Elektromotor zu betreiben. Modernere Einheiten bieten hierbei die Möglichkeit, die Drehzahl und/oder das Drehmoment des Motors zu regeln, sodass der Bohrer des Instruments 100 für die jeweils vorgesehene Behandlungen in optimaler Weise betrieben werden kann.

Entlang des Versorgungsschlauchs 80 können oftmals auch noch weitere Leitungen verlaufen, über die unterschiedliche Fluide oder Medien übertragen werden. Es kann sich hierbei beispielsweise um Luft, Wasser und/oder Spraywasser handeln, welche zum Reinigen oder Kühlen der mit dem Instrument 100 zu bearbeitenden Stelle genutzt werden. Diese Medien werden dann analog zur Drehbewegung des Motors mittels entsprechender Kopplungsmittel an das Instrument 100 weitergeleitet, wobei hierfür am Außenumfang des bereits erwähnten Kupplungszapfens 19 verlaufende Kanäle vorgesehen sind, die u.a. mittels umlaufender Dichtungen in Form von O-Ringen voneinander getrennt sind und mit entsprechenden Kanälen bzw. Ausnehmungen in dem Kupplungsbereich des zahnärztlichen Instruments 100 korrespondieren. Hierdurch wird eine zuverlässige Übergabe der Medien von der Motoreinheit 10 zu dem Dentalinstrument 100 ermöglicht.

Schließlich ist im dargestellten Fall auch vorgesehen, dass über das Instrument 100 eine Lichtabgabe erfolgt, um den zu untersuchenden oder zu bearbeitenden Bereich zu beleuchten. Die Lichtquelle 30, die in Form einer LED vorliegt, ist hierbei ebenfalls in der Motoreinheit 10 positioniert, derart, dass sie das Licht in den rückseitigen Endbereich eines innerhalb des Instruments 100 verlaufenden Lichtleiters einkoppelt. Dieser führt dann zu einer am vorderen Ende vorgesehenen Lichtauskoppelstelle, die idealerweise derart gestaltet ist, dass das Licht auf den vorderen Endbereich des Bohrers bzw. einen Bereich knapp vor der Spitze des Bohrers gerichtet ist.

Die Versorgung der Lichtquelle 30 erfolgt ebenfalls durch die Versorgungseinheit 110 bzw. Motorsteuereinheit 120, wobei hierfür innerhalb dieser entsprechenden Einheit eine Steuereinheit 111 vorgesehen ist, welche eine geeignete Gleichspannung oder niederfrequente Wechselspannung ausgibt. Diese Versorgungsspannung wird über ein innerhalb des Versorgungsschlauchs 80 verlaufendes Leiterpaar 90 an die Motoreinheit 10 übertragen, welche hierfür entsprechende Anschlusskontakte 15 aufweist, die mit einem innerhalb der Motoreinheit 10 weiterführenden Leiterpaar 90 verbunden sind. Die Steuereinheit 111 zur Versorgung der Lichtquelle 30 kann ggf. auch derart ausgeführt sein, dass die übermittelte Leistung variabel ist, sodass die Helligkeit bzw. die Intensität des von der LED 30 abgegebenen Lichts angepasst werden kann.

Die bislang beschriebenen Maßnahmen waren auch bei der im Stand der Technik gemäß Figur 4 gezeigten Lösung vorgesehen. Neu ist nunmehr, dass die Möglichkeit einer Kommunikation letztendlich zwischen dem Behandlungsinstrument 100 und der Versorgungseinheit 110 bzw. Motorsteuereinheit 120 möglich sein soll. Diese Kommunikation soll insbesondere dazu genutzt werden, ein in dem Instrument 100 vorgesehenes Speicherelement in Form eines NFC/RFID-ICs 102 (der Bestandteil eines NFC/RFID-Tags ist) auszulesen bzw. in dem NFC/RFID-IC 102 hinterlegte Daten zu aktualisieren. Insbesondere kann also beispielsweise der NFC/RFID-IC 102 dazu genutzt werden, das Instrument 100 identifizierende Daten zu speichern, sodass die Versorgungseinheit 110 bzw. die Motorsteuereinheit 120 in die Lage versetzt wird, die Ansteuerung des Motors automatisch auf das entsprechend angeschlossene Behandlungsinstrument 100 abzustimmen. Ferner können in dem Tag Informationen zur Nutzung des Instruments 100 hinterlegt werden, mit deren Hilfe erforderliche Wartungs- oder Reparaturmaßnahmen auf die tatsächliche Nutzung des Instruments 100 abgestimmt werden. Ferner besteht - wie angedeutet - zusätzlich auch die Möglichkeit, dass das Instrument 100 mit einer Einheit 200 zum Reinigen - und Pflegen in analoger Weise kommuniziert.

Um hierbei die Notwendigkeit zusätzlicher Anschlüsse im Bereich der Kupplung zwischen Motoreinheit 10 und Instrument 100 zu vermeiden, ist vorgesehen, dass an dieser Stelle eine drahtlose Signalübertragung stattfindet. Die Motoreinheit 10 sowie das Instrument 100 weisen hierfür entsprechend geeignete Sende- und Empfangseinheiten 40 bzw. 101 auf, die ein hochfrequentes digitales Signal drahtlos übermitteln, welches von einer entsprechenden Sende- und Empfangseinheit 115 der Versorgungseinheit 110 bzw. Motorsteuereinheit 120 oder dem NFC/RFID-IC 102 des Instruments 100 zur Verfügung gestellt wird. Dieses hochfrequente Signal wird der jeweiligen Sende- und Empfangseinheit 40 bzw. 101 über entsprechende Leitungen zugeführt und dann über diese Einheiten 40, 101, die letztendlich Antennen darstellen, drahtlos weitergeleitet oder im Falle eines Empfangs als HF-Kommunikationssignal in die entsprechenden Leitungen eingekoppelt, wie dies aus bisherigen Anwendungsfällen für eine Nahfeld-Kommunikation bereits bekannt ist. Im Falle der Antenne 101 des Instruments 100 bildet dann diese gemeinsam mit dem NFC/RFID-IC 102 den üblicherweise in Form einer Baueinheit vorliegenden NFC/RFID-Tag.

An dem dem Kupplungszapfen 19 zugewandten Endbereich des Gehäuses der Motoreinheit 10 ist somit die LED-Lichtquelle angeordnet, die über die nicht näher dargestellten, zuvor beschriebenen Leitungen mit Gleichspannung versorgt wird. In diesem Bereich befindet sich dann vorzugsweise auch die Antenne bzw. Sende- und Kommunikationseinheit 40, da in diesem Bereich eine Anordnung in unmittelbarer Nähe zur Antenne 101 des Instruments 100 und damit eine zuverlässige drahtlose NFC/RFID-Datenübertragung gewährleistet ist. Diese Antenne 40 könnte beispielsweise als ringförmige Antenne, die am vorderen Endbereich des Gehäuses positioniert ist ausgeführt sein. Auch die Verwendung einer folienartig gestalteten, und damit sehr kompakt gehaltenen Antenne wäre denkbar.

Erfindungsgemäß ist nunmehr vorgesehen, dass für die Übermittlung des Kommunikationssignals von der Kommunikationseinheit 115 der Versorgungseinheit 110 bzw. Motorsteuereinheit 120 zur Sende- und Empfangseinheit 40 der Motoreinheit 10 keine separaten Leitungen genutzt werden, sondern stattdessen die bereits vorhandenen, zur Stromversorgung der Lichtquelle 30 genutzten Leitungen 90, 91 verwendet werden. Wie oben erläutert, wird über diese Leitungen zunächst die von der Einheit 111 zur Verfügung gestellte Gleichspannung oder niederfrequente Wechselspannung übermittelt, um die Lichtquelle 30 zu betreiben. Gemäß der vorliegenden Erfindung wird nun allerdings auf diese Leitungen zusätzlich auch das HF-Kommunikationssignal eingeprägt, welches parallel zur Versorgungsspannung für die LED 30 übermittelt wird. Letztendlich führt diese Maßnahme dazu, dass keine zusätzlichen Leitungen über den Versorgungsschlauch 80 geführt werden müssen und auch das Erfordernis zusätzlicher Anschlüsse im eingangsseitigen Bereich der Motoreinheit 10 entfällt. Trotz allem kann die Funktionalität des Systems erweitert und die gewünschte Kommunikation zwischen Instrument 100 und Versorgungs- oder Motorsteuereinheit 110, 120 ermöglicht werden.

Um in diesem Fall allerdings sicherzustellen, dass die verschiedenen Signale (Versorgungsspannung für LED 30 einerseits und HF-Kommunikationssignal andererseits) sich nicht gegenseitig beeinträchtigen, sind erfindungsgemäß zusätzliche Maßnahmen vorgesehen, die einen sicheren Betrieb bzw. eine ungestörte Signalübertragung ermöglichen. Es handelt sich hierbei insbesondere um den Einsatz geeigneter elektronischer Kopplungs- und Trennglieder, mit deren Hilfe die zur Stromversorgung der LED 30 genutzte Gleichspannung oder niederfrequente Wechselspannung von dem HF-Kommunikationssignal entkoppelt wird.

Im Bereich der Motoreinheit 10 ist insbesondere vorgesehen, dass in Serie zur LED 30 eine Induktivität 31 geschaltet ist. Diese Induktivität 31 bzw. Drossel verhindert einen Kurzschluss bzw. eine Demodulation des HF-Signals durch die LED 30, ermöglicht allerdings weiterhin die ungehinderte Weiterleitung des zum Betreiben der LED 30 genutzten Gleichstroms oder niederfrequenten Wechselstroms. In analoger Weise ist ein Kondensator 41 in Serie zur Antenne bzw. Sende- und Empfangseinheit 40 der Motoreinheit 10 geschaltet, der einerseits ein Kopplungsglied für das HF-Signal darstellt und dieses somit im Wesentlichen unverändert zur Antenne weiterleitet, gleichzeitig allerdings ein Trennglied für das Gleichstromsignal oder generell eine niederfrequente Wechselspannung bildet.

Die Serienschaltungen bestehend aus LED 30 und Induktivität 31 bzw. Antenne 40 und Koppelkondensator 41 sind hierbei parallel zueinander geschaltet, wodurch letztendlich sichergestellt ist, dass der LED 30 und der Sende- und Empfangseinheit 40 jeweils nur das entsprechend vorgesehene Signal übermittelt wird. Je nach Ausgestaltung der für die Kommunikation mit dem NFC/RFID-IC 102 vorgesehenen Sende- und Empfangseinheit 40 kann hierbei vorgesehen sein, wie in Figur 1 erkennbar, zusätzlich parallel zu dieser einen Kondensator 42 zu schalten, mit dessen Hilfe die ggf. erforderliche HF-Anpassung erzielt wird. Für die erfindungsgemäße Entkopplung der beiden Signale sind allerdings die bereits erwähnte Induktivität 31 sowie der Kondensator 41 verantwortlich.

In analoger Weise muss eine entsprechende Entkopplung der über das Leiterpaar 90 bzw. 91 übertragenen Signals auch im Bereich der Versorgungseinheit 110 bzw. der Motorsteuereinheit 120 erfolgen. Dementsprechend ist auch hier vorgesehen, dass in Serie zur Steuereinheit 111 zum Betreiben der LED 30 eine Induktivität 112 geschaltet ist. In Serie zur Kommunikationseinheit 115 hingegen ist ein Kondensator 116 angeordnet, wobei die Funktionsweise von Induktivität 112 und Kondensator 116 die gleiche ist wie bei Induktivität 31 und Kondensator 41 der Motoreinheit 10.

Letztendlich wird somit entsprechend der vorliegenden Erfindung ein Verbraucher - hier die LED 30 - der Motoreinheit 10 mit Strom versorgt und ferner eine Kommunikation zwischen Instrument 100 und Versorgungseinheit 110 bzw. Motorsteuereinheit 120 ermöglicht, wobei zur Übermittlung der entsprechenden Signale lediglich ein einziges Leiterpaar verwendet wird, so dass die Ausgestaltung und der Platzbedarf insbesondere der Motoreinheit 10 vereinfacht und reduziert wird.

Dabei kann in einer Weiterbildung des bislang beschriebenen Gedankens vorgesehen sein, dass auch die Motoreinheit 10 ein Speicherelement 12 in Form eines NFC/RFID-ICs aufweist, mit dessen Hilfe relevante Daten gespeichert und gegebenenfalls aktualisiert werden können. Dieser zusätzliche NFC/RFID-IC 12 ist dann wiederum mit einer Antenne 11 gekoppelt, die eine Nahfeldkommunikation mit der (primären) Sende- und Empfangseinheit 40 ermöglicht, sodass der angestrebte Datenaustausch zwischen dem durch den NFC/RFID-IC 12 und die Antenne 11 gebildeten weiteren NFC/RFID-Tag und der Sende- und Empfangseinheit 115 der Versorgungseinheit oder Motorsteuereinheit 110 bzw. 120 stattfinden kann.

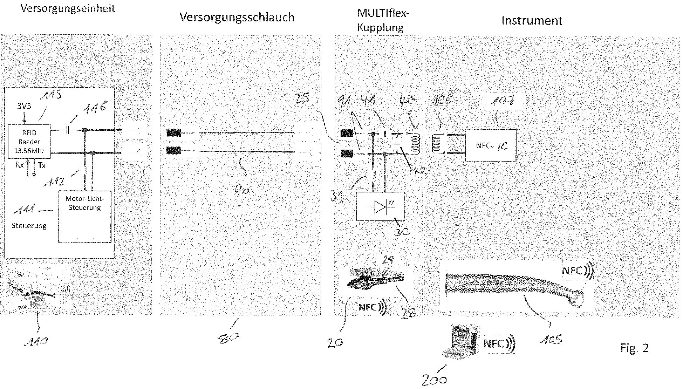

Dabei ist die beschriebene Lösung nicht auf zahnärztliche Handstücke 100 beschränkt, die mithilfe eines Elektromotors betrieben werden. In analoger Weise kann das erfindungsgemäße Konzept beispielsweise auch bei sogenannten Turbinenhandstücken 105 zum Einsatz kommen, wie dies in Figur 2 gezeigt ist. Selbstverständlich kann die im Folgenden erläuterte Kupplungseinheit auch allgemein zum Betreiben luftbetriebener Dentalinstrumente, also z.B. auch für Pulverstrahlgeräte oder pneumatisch betriebene Zahnsteinentfernungsgeräte verwendet werden.

Anstelle der Motoreinheit 10 mit einem integrierten Elektromotor ist nunmehr also eine Kupplungseinheit 20 vorgesehen, die wiederum über den Versorgungsschlauch 80 mit der Versorgungseinheit 110 des zahnärztlichen Behandlungsplatzes verbunden ist, wobei diese Verbindung fest bzw. dauerhaft oder lösbar gestaltet sein kann. Zum Betreiben des Instruments 105 wird nunmehr von dem Behandlungsplatz in nicht näher dargestellter Weise eine variable Druckluft zur Verfügung gestellt, die über den Versorgungsschlauch 80 zur Kupplungseinheit 20 weitergeleitet und dort mittels geeigneter Kupplungselemente 28 dem Turbinenhandstück 105 zugeführt wird. Dies ist aus dem Stand der Technik bereits hinlänglich bekannt. Die Druckluft ersetzt in diesem Fall also den von der Versorgungseinheit 110 oder Motorsteuereinheit 120 in Figur 1 zur Verfügung gestellten Strom zum Betreiben des Elektromotors.

Analog zur Motoreinheit 10 umfassen auch in diesem Fall die Kupplungselemente 28 einen Kupplungszapfen 29, der sich in axialer Richtung erstreckt und auf den das Dentalinstrument 105 zur Kopplung mit der Kupplungseinheit 20 aufgesetzt wird. Der Kupplungszapfen 29 ermöglicht eine werkzeuglose, schnell zu realisierende Verbindung mit dem Instrument 105, wobei es die Ausgestaltung des Kupplungszapfens 29 erlaubt, dass das Instrument 105 frei gegenüber diesem um eine zentrale Achse verdreht werden kann. Die wiederum am Außenumfang des Kupplungszapfens 29 verlaufende Kanäle, die mittels umlaufender Dichtungen voneinander getrennt sind und mit entsprechenden Kanälen bzw. Ausnehmungen in dem Kupplungsbereich des zahnärztlichen Instruments 105 korrespondieren, stellen sicher, dass unabhängig von der Drehstellung des Instruments 105 eine Übergabe der Medien von der Kupplungseinheit 20 zu dem Dentalinstrument 105 bzw. im Falle der Rückluft von dem Dentalinstrument 105 zu der Kupplungseinheit 20 erfolgen kann.

Auch in diesem Fall ist allerdings vorgesehen, dass die Kupplungseinheit 20 eine Lichtquelle 30 aufweist, deren Licht an das Turbineninstrument 105 übertragen wird, um eine zu behandelnde Stelle zu beleuchten, wobei ebenso wie bei dem Ausführungsbeispiel in Figur 1 die Versorgung der LED 30 durch eine entsprechende, idealerweise variable Spannungsquelle 111 der Versorgungseinheit 110 erfolgt. Die Zuführung der Versorgungsspannung erfolgt über ein in dem Versorgungsschlauch 80 verlaufendes Leiterpaar 90, welches über entsprechende elektrische Anschlüsse 25 der Kupplungseinheit 20 mit einem intern zu der LED 30 führenden Leiterpaar 91 verbunden wird. Ferner weist das Turbinenhandstück 105 wiederum einen NFC/RFID-IC 107 auf, welcher mit der Kommunikationseinheit 115 der Versorgungseinheit kommunizieren soll und hierzu mit einer Antenne 106 gekoppelt ist, die drahtlos mit einer entsprechenden Sende- und Empfangseinheit 40 der Kupplungseinheit 20 kommuniziert.

Dabei werden wie bei dem ersten Ausführungsbeispiel die bereits vorhandenen Leiterpaare 90, 91 des Versorgungsschlauchs 80 sowie der Schaltungsanordnung zum Betreiben der LED 30 innerhalb der Kupplungseinheit 20 dazu genutzt, parallel zum Versorgungsstrom für die LED 30 auch das HF-Kommunikationssignal zu übertragen. Wiederum muss also eine Entkopplung von Gleichspannung bzw. niederfrequenter Wechselspannung sowie HF-Signal vorgenommen werden, was auch in diesem Fall mithilfe der Induktivität 31 sowie des Kondensators 41 erfolgt. Diese sind in identischer Weise wie bei dem Ausführungsbeispiel gemäß Figur 1 mit der LED 30 und der Sende- und Empfangseinheit 40 gekoppelt, also in Serie geschaltet, wobei die resultierenden Serienschaltungen parallel zueinander geschaltet sind. Da innerhalb der Versorgungseinheit 110 in analoger Weise mit Hilfe der Induktivität 112 und des Kondensators 116 eine Entkopplung zwischen Gleichspannung und Hochfrequenzsignal stattfindet, können also wiederum die bereits bestehenden Leitungen zusätzlich und störungsfrei auch für die ergänzende Kommunikation genutzt werden.

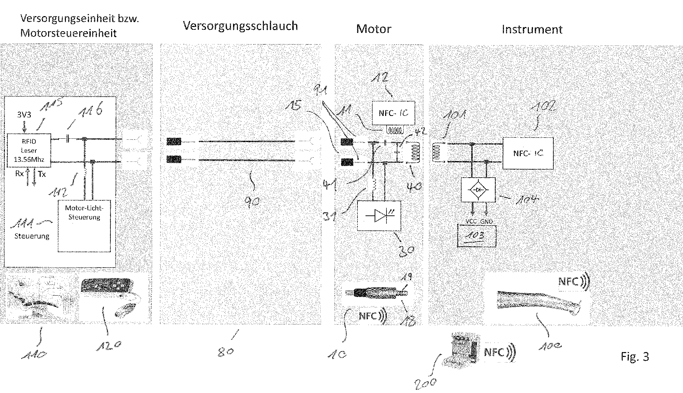

Figur 3 zeigt als Weiterbildung des in Figur 1 dargestellten Erfindungsgedankens eine zusätzliche Maßnahme, die gegebenenfalls an dem zahnärztlichen Instrument 100 vorgesehen sein kann. So bestünde die Möglichkeit, das HF-Kommunikationssignal, welches drahtlos an die Sende- und Empfangseinheit 101 des Instruments 100 weitergeleitet wird, zusätzlich auch zur Versorgung eines weiteren Verbrauchers 103, der in dem Instrument 100 angeordnet ist, zu nutzen. Wie in Figur 3 gezeigt ist, ist dieser zusätzliche Verbraucher 103, der beispielsweise eine weitere Lichtquelle sein kann, parallel zum NFC/RFID-IC 102 geschaltet und derart gestaltet, dass er den Datenaustausch des NFC/RFID-ICs 102 mit der Kommunikationseinheit 115 der Versorgungseinheit 110 bzw. Motorsteuereinheit 120 nicht beeinträchtigt. Die Ankopplung des Verbrauches 103 an die interne Schaltungsanordnung des Instruments 100 erfolgt über ein geeignetes Kopplungsglied, im dargestellten Fall über einen Gleichrichter 104.

Anzumerken ist, dass anstelle der in den Ausführungsbeispielen dargestellten LED auch ein anderweitiger Verbraucher mit den zugehörigen Leitungen in erfindungsgemäßer Weise genutzt werden könnte. Denkbar wäre beispielsweise, über die Leitungen einen Sensor mit Strom zu versorgen, mit dessen Hilfe eine Entnahme des Instruments aus einer entsprechenden Ablage der Versorgungseinheit oder der Motorsteuereinheit erkannt werden kann. Aus dem Stand der Technik ist hierzu bekannt, Reed-Schalter oder ähnliche Sensoren einzusetzen. An die Stelle des LED-Treibers tritt dann in diesem Fall eine in der Versorgungseinheit oder der Motorsteuereinheit angeordnete Auswerte-Logik, die in analoger Weise über das Leiterpaar mit dem Sensor verbunden ist, jedoch wiederum durch die beschriebenen erfindungsgemäßen Kopplungs- und Trennglieder von der HF-Kommunikation entkoppelt ist, so dass einerseits die Entnahme des Instruments aus der Ablage sowie andererseits die NFC/RFID-Kommunikation ungestört erfolgen kann.

Hinsichtlich der Versorgungseinheit ist anzumerken, dass im Falle eines zahnärztlichen Behandlungsplatzes üblicherweise dieser derart ausgelegt ist, dass die Versorgungseinheit mehrere Instrumente versorgen kann. In diesem Fall ist es von Vorteil, wenn innerhalb der Versorgungseinheit eine entsprechende Schaltmatrix (bevorzugt eine Relais-Schaltmatrix) bzw. ein Multiplexer vorgesehen ist, die/der wahlweise die verschiedenen Instrumente im Bedarfsfall ansteuert. Die in den Figuren dargestellte Kommunikationseinheit 115 der Versorgungseinheit 110 kann in diesem Fall also einmalig bereitgestellt werden, durch entsprechende Ansteuerung der Relais-Schaltmatrix allerdings für die verschiedenen Instrumente genutzt werden. In diesem Fall ist keine Mehrzahl von Kommunikationseinheiten erforderlich und es werden keine zusätzlichen Umschalter benötigt.

## Patentansprüche

1. Zahnmedizinische Motor- oder Kupplungseinheit (10, 20), welche zur Kopplung mit einem zahnmedizinischen Instrument (100, 105) ausgebildet ist, wobei die Motor- oder Kupplungseinheit (10, 20) eine elektrische Schaltungsanordnung aufweist, welche über ein Leiterpaar (91) mit einer Versorgungseinheit (110, 120) verbindbar ist und aufweist:
• einen Verbraucher (30), der über das Leiterpaar (91) mit Gleichspannung oder einer niederfrequenten Wechselspannung versorgt wird,
• eine Sende- und Empfangseinheit (40), welche als Antenne dazu ausgebildet ist, mittels/ über Nahfeldkommunikation mit einer weiteren Sende- und Empfangseinheit (11, 101, 106) zu kommunizieren und hierzu ein über das Leiterpaar (91) übermitteltes HF-Kommunikationssignal drahtlos zu senden oder ein von der weiteren Sende- und Empfangseinheit (11, 101, 106) empfangenes HF-Kommunikationssignal in das Leiterpaar (91) einzukoppeln,
• in die Schaltungsanordnung integrierte Kopplungs- und Trennglieder (31, 41), welche die zur Stromversorgung des Verbrauchers (30) genutzte Gleichspannung oder niederfrequente Wechselspannung von dem HF-Kommunikationssignal entkoppeln.

2. Zahnmedizinische Motor- oder Kupplungseinheit nach Anspruch 1,
**dadurch gekennzeichnet,**
**dass** die Kopplungs- und Trennglieder mindestens einen Kondensator (41) aufweisen, der in Serie zur der Sende- und Empfangseinheit (40) geschaltet ist.

3. Zahnmedizinische Motor- oder Kupplungseinheit nach Anspruch 1 oder 2,
**dadurch gekennzeichnet,**
**dass** die Kopplungs- und Trennglieder mindestens eine Induktivität (31) aufweisen, welche in Serie zu dem Verbraucher geschaltet ist.

4. Zahnmedizinische Motor- oder Kupplungseinheit nach Anspruch 2 und 3,
**dadurch gekennzeichnet,**
**dass** die Serienschaltung aus Kondensator (41) und Sende- und Empfangseinheit (40) parallel zur Serienschaltung aus Induktivität (31) und Verbraucher (30) geschaltet ist.

5. Zahnmedizinische Motor- oder Kupplungseinheit nach einem der vorherigen Ansprüche, **dadurch gekennzeichnet,**
**dass** die Motor- oder Kupplungseinheit (10, 20) eingangsseitige Versorgungsanschlüsse (15, 25) aufweist, über welche die Schaltungsanordnung mit einer Versorgungsleitung (80) verbindbar oder verbunden ist, welche das Leiterpaar (91) mit der Versorgungseinheit (110, 120) verbindet.

6. Zahnmedizinische Motor- oder Kupplungseinheit nach einem der vorherigen Ansprüche, **dadurch gekennzeichnet,**
**dass** der Verbraucher (30) und die Sende- und Empfangseinheit (40) auf einem gemeinsamen Träger, insbesondere auf einer gemeinsamen Platine angeordnet sind.

7. Zahnmedizinische Motor- oder Kupplungseinheit nach einem der vorherigen Ansprüche, **dadurch gekennzeichnet,**
**dass** der Verbraucher (30) durch eine Lichtquelle, insbesondere eine LED, oder durch einen Sensor, insbesondere einen Reed-Schalter gebildet ist.

8. Zahnmedizinische Motor- oder Kupplungseinheit nach einem der vorherigen Ansprüche, **dadurch gekennzeichnet,**
**dass** die Motor- oder Kupplungseinheit (10, 20) Kopplungselemente (18, 28) zur mechanischen Verbindung mit dem medizinischen Instrument (100, 105) aufweist, wobei die Sende- und Empfangseinheit (40) im Bereich der Kopplungselemente (18, 28) angeordnet ist, um mit einer in dem medizinischen Instrument (100, 105) vorgesehenen weiteren Sende- und Empfangseinheit (101, 106) drahtlos zu kommunizieren.

9. Zahnmedizinische Motor- oder Kupplungseinheit nach Anspruch 8,
**dadurch gekennzeichnet,**
**dass** die Kopplungselemente (18, 28) dazu ausgebildet sind
a) ein Antriebsmedium wie z.B. Strom oder Druckluft
oder
b) eine mechanische Bewegung, insbesondere eine Rotationsbewegung
an das mit der Motor- oder Kopplungseinheit (10, 20) verbundene medizinische Instrument zu (100, 105) übertragen,
wobei die Kopplungselemente (18, 29) vorzugsweise einen Kupplungszapfen (19, 29) aufweisen, an dessen Außenumfang Kanäle verlaufen, die mittels umlaufender Dichtungen voneinander getrennt sind mit entsprechenden Kanälen bzw. Ausnehmungen in einem Kupplungsbereich des zahnärztlichen Instruments (100, 105) korrespondieren, wobei über die Kanäle besonders bevorzugt die Übergabe weiterer Medien, beispielsweise von Luft, Wasser und/oder Spraywasser erfolgt.

10. Zahnmedizinische Motor- oder Kupplungseinheit nach Anspruch 8 oder 9,
**dadurch gekennzeichnet,**
**dass** die Sende- und Empfangseinheit (40) als ringförmige Antenne ausgebildet ist.

11. Zahnmedizinische Motor- oder Kupplungseinheit nach einem der vorherigen Ansprüche, **dadurch gekennzeichnet,**
**dass** die Motor- oder Kopplungseinheit (10, 20) eine von der Sende- und Empfangseinheit (40) getrennte weitere Sende- und Empfangseinheit (11) aufweist, wobei beide Sende- und Empfangseinheiten drahtlos miteinander kommunizieren.

12. Zahnmedizinische Steuerungseinheit (110, 120), insbesondere Behandlungseinheit (110) zum Betreiben eines zahnmedizinischen Instruments (100, 105), aufweisend eine Motor- oder Kupplungseinheit (10, 20) nach einem der vorherigen Ansprüche,
wobei die Steuerungseinheit (110, 120) über eine Leitung (80) mit einem Leiterpaar (90) mit der Motor- oder Kupplungseinheit (10, 20) verbindbar ist, und
wobei die Steuerungseinheit (110, 120) aufweist:
• einen Treiber (111) oder eine Auswerteschaltung, welche(r) zur Stromversorgung des Verbrauchers (30) diesen über das Leiterpaar (90) mit Gleichspannung oder einer niederfrequenten Wechselspannung versorgt,
• eine Nahfeldkommunikations-Einheit (115), welches das Leiterpaar (90) zum Senden und Empfangen von HF-Kommunikationssignalen nutzt, sowie
• Kopplungs- und Trennglieder (112, 116), welche die zur Stromversorgung des Verbrauches (30) genutzte Gleichspannung oder niederfrequente Wechselspannung von dem HF-Kommunikationssignal entkoppeln.

13. Steuerungseinheit nach Anspruch 12,
**dadurch gekennzeichnet,**
**dass** die Kopplungs- und Trennglieder mindestens einen Kondensator (116) aufweisen, der in Serie zur der Nahfeldkommunikations-Einheit (115) geschaltet ist.

14. Steuerungseinheit nach Anspruch 13,
**dadurch gekennzeichnet,**
**dass** die Kopplungs- und Trennglieder mindestens eine Induktivität (112) aufweisen, welche in Serie zu dem Treiber (111) geschaltet ist.

15. Steuerungseinheit nach einem der Ansprüche 12 bis 14,
**dadurch gekennzeichnet,**
**dass** der Treiber (111) dazu ausgebildet ist, den Verbraucher (30) mit einer veränderbaren Leistung zu betreiben.

## Claims

1. Dental motor or coupling unit (10, 20), which is designed to be coupled to a dental instrument (100, 105), wherein the motor or coupling unit (10, 20) has an electrical circuit arrangement, which can be connected to a supply unit (110, 120) via a pair of conductors (91) and has:
• a consumer (30), which is supplied with DC voltage or a low-frequency AC voltage via the pair of conductors (91),
• a transmitting and receiving unit (40), which, as an antenna, is designed to communicate with a further transmitting and receiving unit (11, 101, 106) by means of/via near-field communication and for this purpose to wirelessly transmit an RF communication signal transmitted via the pair of conductors (91) or to couple an RF communication signal received by the further transmitting and receiving unit (11, 101, 106) into the pair of conductors (91),
• coupling and isolating members (31, 41) which are integrated into the circuit arrangement and decouple the DC voltage or low-frequency AC voltage used for supplying power to the consumer (30) from the RF communication signal.

2. Dental motor or coupling unit according to Claim 1, **characterized**
**in that** the coupling and isolating members have at least one capacitor (41), which is connected in series to the transmitting and receiving unit (40).

3. Dental motor or coupling unit according to Claim 1 or 2,
**characterized**
**in that** the coupling and isolating members have at least one inductor (31), which is connected in series to the consumer.

4. Dental motor or coupling unit according to Claims 2 and 3,
**characterized**
**in that** the series circuit consisting of the capacitor (41) and the transmitting and receiving unit (40) is connected in parallel to the series circuit consisting of the inductor (31) and the consumer (30).

5. Dental motor or coupling unit according to any of the preceding claims,
**characterized**
**in that** the motor or coupling unit (10, 20) has input- end supply connections (15, 25), via which the circuit arrangement can be or is connected to a supply line (80), which connects the pair of conductors (91) to the supply unit (110, 120).

6. Dental motor or coupling unit according to any of the preceding claims,
**characterized**
**in that** the consumer (30) and the transmitting and receiving unit (40) are arranged on a common carrier, in particular on a common circuit board.

7. Dental motor or coupling unit according to any of the preceding claims,
**characterized**
**in that** the consumer (30) is formed by a light source, in particular an LED, or by a sensor, in particular a reed switch.

8. Dental motor or coupling unit according to any of the preceding claims,
**characterized**
**in that** the motor or coupling unit (10, 20) has coupling elements (18, 28) for mechanical connection to the medical instrument (100, 105), wherein the transmitting and receiving unit (40) is arranged in the region of the coupling elements (18, 28) in order to wirelessly communicate with a further transmitting and receiving unit (101, 106) provided in the medical instrument (100, 105).

9. Dental motor or coupling unit according to Claim 8, **characterized**
**in that** the coupling elements (18, 28) are designed to transfer
a) a drive medium, such as electricity or compressed air for example,
or
b) a mechanical movement, in particular a rotational movement,
to the medical instrument (100, 105) connected to the motor or coupling unit (10, 20),
wherein the coupling elements (18, 29) preferably have a coupling pin (19, 29), on the outer circumference of which channels run, which channels are separated from each other by means of circumferential seals correspond to corresponding channels or recesses in a coupling region of the dental instrument (100, 105), wherein further media, for example air, water and/or spray water, are particularly preferably transferred via the channels.

10. Dental motor or coupling unit according to Claim 8 or 9,
**characterized**
**in that** the transmitting and receiving unit (40) is designed as a ring-shaped antenna.

11. Dental motor or coupling unit according to any of the preceding claims,
**characterized**
**in that** the motor or coupling unit (10, 20) has a further transmitting and receiving unit (11) which is separate from the transmitting and receiving unit (40), wherein both transmitting and receiving units communicate wirelessly with each other.

12. Dental control unit (110, 120), in particular treatment unit (110) for operating a dental instrument (100, 105), comprising a motor or coupling unit (10, 20) according to any of the preceding claims,
wherein the control unit (110, 120) can be connected to the motor or coupling unit (10, 20) via a line (80) with a pair of conductors (90), and
wherein the control unit (110, 120) has:
• a driver (111) or an evaluation circuit, which, for supplying power to the consumer (30), supplies the consumer with DC voltage or a low-frequency AC voltage via the pair of conductors (90),
• a near-field communication unit (115), which uses the pair of conductors (90) to send and receive RF communication signals, and
• coupling and isolating members (112, 116), which decouple the DC voltage or low-frequency AC voltage used to supply power to the consumer (30) from the RF communication signal.

13. Control unit according to Claim 12,
**characterized**
**in that** the coupling and isolating members have at least one capacitor (116), which is connected in series with the near-field communication unit (115).

14. Control unit according to Claim 13,
**characterized**
**in that** the coupling and isolating members have at least one inductor (112), which is connected in series with the driver (111).

15. Control unit according to any of Claims 12 to 14, **characterized**
**in that** the driver (111) is designed to operate the consumer (30) with a variable power.

## Revendications

1. Unité à moteur ou de couplage dentaire (10, 20), qui est conçue pour être couplée à un instrument dentaire (100, 105), l'unité à moteur ou de couplage (10, 20) comportant un ensemble formant circuit électrique, qui peut être relié à une unité d'alimentation (110, 120) par une paire de conducteurs (91) et comporte :
• un consommateur (30), qui est alimenté en tension continue ou en tension alternative basse fréquence par la paire de conducteurs (91),
• une unité d'émission et de réception (40), qui, en tant qu'antenne, est conçue pour communiquer avec une autre unité d'émission et de réception (11, 101, 106) au moyen de/par une communication en champ proche et, à cet effet, pour émettre sans fil un signal de communication HF transmis par la paire de conducteurs (91) ou pour injecter un signal de communication HF reçu par l'autre unité d'émission et de réception (11, 101, 106) dans la paire de conducteurs (91),
• des éléments de couplage et de séparation (31, 41) intégrés dans l'ensemble formant circuit, qui découplent la tension continue ou la tension alternative basse fréquence utilisée pour alimenter en courant le consommateur (30) du signal de communication HF.

2. Unité à moteur ou de couplage dentaire selon la revendication 1,
**caractérisée en ce**
**que** les éléments de couplage et de séparation comportent au moins un condensateur (41), qui est monté en série par rapport à l'unité d'émission et de réception (40).

3. Unité à moteur ou de couplage dentaire selon la revendication 1 ou 2,
**caractérisée en ce**
**que** les éléments de couplage et de séparation comportent au moins une inductance (31), qui est branchée en série avec le consommateur.

4. Unité à moteur ou de couplage dentaire selon les revendications 2 et 3,
**caractérisée en ce**
**que** le circuit série composé du condensateur (41) et de l'unité d'émission et de réception (40) est branché en parallèle avec le circuit série composé de l'inductance (31) et du consommateur (30).

5. Unité à moteur ou de couplage dentaire selon l'une des revendications précédentes,
**caractérisée en ce**
**que** l'unité à moteur ou de couplage (10, 20) comporte des bornes d'alimentation côté entrée (15, 25), par lesquelles l'ensemble formant circuit peut être relié ou est relié à une ligne d'alimentation (80) qui relie la paire de conducteurs (91) à l'unité d'alimentation (110, 120).

6. Unité à moteur ou de couplage dentaire selon l'une des revendications précédentes,
**caractérisée en ce**
**que** le consommateur (30) et l'unité d'émission et de réception (40) sont disposés sur un support commun, en particulier sur une platine commune.

7. Unité à moteur ou de couplage dentaire selon l'une des revendications précédentes,
**caractérisée en ce**
**que** le consommateur (30) est formé par une source de lumière, en particulier une DEL, ou par un capteur, en particulier un interrupteur à lames.

8. Unité à moteur ou de couplage dentaire selon l'une des revendications précédentes,
**caractérisée en ce**
**que** l'unité à moteur ou de couplage (10, 20) comporte des éléments de couplage (18, 28) pour la liaison mécanique à l'instrument médical (100, 105), l'unité d'émission et de réception (40) étant disposée dans la zone des éléments de couplage (18, 28) pour communiquer sans fil avec une autre unité d'émission et de réception (101, 106) prévue dans l'instrument médical (100, 105).

9. Unité à moteur ou de couplage dentaire selon la revendication 8,
**caractérisée en ce**
**que** les éléments de couplage (18, 28) sont conçus pour transmettre
a) un moyen d'entraînement, par exemple, du courant ou de l'air comprimé
ou
b) un mouvement mécanique, en particulier un mouvement de rotation
à l'instrument médical (100, 105) relié à l'unité à moteur ou de couplage (10, 20),
les éléments de couplage (18, 29) comportant de préférence un tenon de couplage (19, 29), sur la périphérie extérieure duquel s'étendent des canaux qui sont séparés les uns des autres au moyen de joints d'étanchéité périphériques correspondent à des canaux ou évidements correspondants dans une zone de couplage de l'instrument dentaire (100, 105), le transfert d'autres milieux, par exemple d'air, d'au et/ou d'eau de pulvérisation, étant effectué de manière particulièrement préférée par les canaux.

10. Unité à moteur ou de couplage dentaire selon la revendication 8 ou 9,
**caractérisée en ce**
**que** l'unité d'émission et de réception (40) est conçue comme une antenne annulaire.

11. Unité à moteur ou de couplage dentaire selon l'une des revendications précédentes,
**caractérisée en ce**
**que** l'unité à moteur ou l'unité de couplage (10, 20) comporte une autre unité d'émission et de réception (11) séparée de l'unité d'émission et de réception (40), les deux unités d'émission et de réception communiquant sans fil l'une avec l'autre.

12. Unité de commande dentaire (110, 120), en particulier unité de traitement (110) pour faire fonctionner un instrument dentaire (100, 105), comportant une unité à moteur ou de couplage (10, 20) selon l'une des revendications précédentes,
l'unité de commande (110, 120) pouvant être reliée à l'unité à moteur ou de couplage (10, 20) à une paire de conducteurs (90) par une ligne (80), et
l'unité de commande (110, 120) comportant :
• un circuit d'attaque (111) ou un circuit d'évaluation, qui alimente le consommateur (30) en tension continue ou en une tension alternative basse fréquence par la paire de conducteurs (90) pour l'alimenter en courant,
• une unité de communication en champ proche (115), qui utilise la paire de conducteurs (90) pour émettre et recevoir des signaux de communication HF, ainsi que
• des éléments de couplage et de séparation (112, 116), qui découplent la tension continue ou la tension alternative basse fréquence utilisée pour alimenter en courant le consommateur (30) du signal de communication HF.

13. Unité de commande selon la revendication 12, **caractérisée en ce**
**que** les éléments de couplage et de séparation comportent au moins un condensateur (116), qui est branché en série avec l'unité de communication en champ proche (115).

14. Unité de commande selon la revendication 13, **caractérisée en ce**
**que** les éléments de couplage et de séparation comportent au moins une inductance (112), qui est branchée en série avec le circuit d'attaque (111).

15. Unité de commande selon l'une des revendications 12 à 14,
**caractérisée en ce**
**que** le circuit d'attaque (111) est conçu pour faire fonctionner le consommateur (30) avec une puissance variable.
